# EUROPEAN PATENT APPLICATION

(11) **EP 4 223 509 A2**
(43) Date of publication of application: **09.08.2023**
(21) Application number: 23166844.3
(22) Date of filing: 11.08.2020
(51) Int. Cl.: B32B 21/02, B27N 3/00, B27N 3/14, B27N 3/24, B32B 21/13

(54) **PLANT AND METHOD TO PRODUCE A WOOD FIBER PANEL**

(30) Priority: 12.08.2019 IT 201900014682
(62) Divisional of application: 20190477.8
(71) Applicant: Fantoni S.p.A., 33010 Osoppo (UD) (IT)
(72) Inventor: Fantoni, Marco, 33013 Gemona del Friuli (UD) (IT)
(74) Representative: Petraz, Gilberto Luigi

(57) **Abstract**

A plant and a method to produce a panel of multilayer wood fiber consisting of at least three layers, of which one internal core layer (12) and two external layers (11, 13) disposed adjacent to the internal core layer (12) on opposite sides with respect to each other, wherein the internal core layer (12) is formed by recycled wood fiber or by combinations of recycled and virgin wood fiber and the external layers (11, 13) comprise virgin wood fiber.

## Description

### FIELD OF THE INVENTION

Embodiments described here concern a wood fiber panel, in particular of the MDF (Medium Density Fiberboard) type, advantageously obtained with a high content of wood fiber coming from recycled wood material.

Embodiments described here also concern a plant and method to produce said wood fiber panel.

### BACKGROUND OF THE INVENTION

It is known that solid wood, or more cheaply chipboard or fiberboard, can be used to make wood-based products, for example for use in furnishings. Typically, in the latter case, the so-called MDF (Medium Density Fiberboard) is used, that is, medium density fiberboard obtained dry. Generally, an MDF consists only of virgin wood fibers properly treated in order to obtain superior quality panels for the production of furnishings, doors, panels, shelves and furniture of various kinds.

The working steps for the production of an MDF panel typically include the preparation of the fiber, which entails the production of wood chips, possible washing of the wood chips, screening, defibration, that is, the reduction of the wood material into fiber, resin treatment, drying. The fiber thus prepared is stretched to form a thick layer of fiber, called "mattress" in the technical jargon of the specific sector of the art, after which pressing, cutting to size and final cooling are carried out; afterwards, sanding, sectioning and embellishing and/or coating operations can be carried out.

In addition to the economic advantage, compared to solid wood, MDF obtains great advantages in terms of mechanical workability (e.g. for milling operations) but also in terms of precision and dimensional stability.

In particular, then, an MDF panel with a high surface quality is highly sought after because, on the surface, it can be easily painted, lacquered or coated with plastic films in order to obtain both matt and gloss finishes for applications of high aesthetic quality as well as structural quality, which can be used in the fields of furniture, furnishing and interior decorating in general.

Over the years, the need has arisen for a more ecological and contained management of virgin wood, that is, wood from plantations, woods and/or forests. Consequently, in many sectors, including that of furnishings, we are moving toward a more ecological and efficient vision, also called circular economy, in which materials can be reused as much as possible. The wood used, for example, can be derived from industrial production waste, or from post-consumption, that is, already used for the production of objects or artefacts and cheaply recycled once such objects or artefacts are decommissioned, with a view to better management of existing resources, reducing waste of material, reducing the purchase costs of raw material and preventing excessive deforestation.

However, the use of recycled wood involves considerable working difficulties, especially due to the high presence of pollutants of various kinds, such as for example metals, plastics, glass or other inert materials, making it difficult to use it in the production of high-quality wood fiber panels, such as for example MDF.

Furthermore, since it is heterogeneous in type and size, recycled wood does not have the same working possibilities and the same mechanical and aesthetic characteristics as virgin wood, suitably selected for the construction of high-quality wood fiber panels.

For many years, the field of chipboard panel production has developed methods and modes for using recycled wood in its products, obtaining satisfactory quality and performance.

The same cannot be said, however, for the production of MDF panels, for which the use of recycled wood is extremely limited in quantity and also in quality, where "quality" refers to both the types of recycled material that can be used and also to the performance of the finished product. In fact, in the production cycle of MDF, the use of recycled material entails the production of poor quality fiber as well as the inevitable presence of residual foreign bodies due to the efficiency of separation, which is naturally not 100%, of the cleaning systems. This means that MDF panels produced from recycled wood have critical issues that greatly limit their use, especially for workings where surface quality is fundamental, such as painting, lacquering, coating with plastic films, etc.

Document EP 2 216 149 A1 describes a particleboard or chipboard, normally made with three layers, making up particles of different sizes for the internal layer with respect to the two external layers. The particles are obtained by grinding or cutting and subsequently separated by screening. By virtue of the different dimensional spectra typical of the internal layer, which has a characteristic particle size of about 1-10 mm, and of the external layers, which have a characteristic particle size of about 0.15-1 mm, the chipboard panel always shows a great lack of homogeneity in the grain size and therefore in the direction of the thickness.

Document WO-A-2019/007538 describes a process for the production of a panel of the Oriented Strand Board (OSB) type comprising long and narrow flakes or strands of recycled wood. Based on what is known in literature and reported for example on page 364 of the "Handbook of Wood Chemistry and Wood Composites", Rowell, 2013, the strands needed to produce OSB consist of thin sheets or flakes of wood obtained from cutting processes and generally have a thickness of 0.3-0.8 mm and a length of 50-150 mm. The flakes that form an OSB panel are directed and oriented in a desired manner according to a preferential direction of orientation. Usually OSB panels are formed of three layers, where the flakes of the outermost layers are aligned parallel to the longitudinal edges of the panel, that is, in the direction of main development in length, while the flakes of the central layer ("core") are generally shorter and aligned at a right angle to the flakes of the external layers. This orientation affects the mechanical characteristics of the OSB panel, which are differentiated between the longitudinal and transverse direction of the panel itself. This configuration therefore gives the panel anisotropic mechanical properties, generally with a greater flexional resistance in the direction of the long sides of the panel, compared to the direction parallel to the short side of the panel.

Document WO-A-2012/001483 also describes an OSB panel, therefore formed by long and thin wood flakes oriented in a desired way as in document WO-A-2019/007538, which therefore have specific anisotropic dimensional characteristics and mechanical characteristics between length and width of the panel itself. For example, this document indicates a flexional resistance in length between 30 N/mm² and 40 N/mm² and a flexional resistance in width between 14 N/mm² and 19 N/mm² and an elastic modulus in length between 6000 N/mm² and 7500 N/mm² and elastic modulus in width between 1900 N/mm² and 2900 N/mm².

The flakes/strands used to make known OSB panels are made by means of a cutting operation in suitable mills called "drum flakers", "disc flakers" or "knife ring flakers". Moreover, similar machines and manufacturing processes are also used in the production of the chipboard or particleboard panel, for example described in document EP 2 216 149 A1. These machines act directly on the debarked trunk or on chips obtained from previous grinding operations.

Document US 5,866,057 A describes a multilayer panel in which the fibers are bonded by tannin-formaldehyde adhesives. This document necessarily provides to use old wooden panels or fiber boards containing formaldehyde, as a necessary condition for the cross-linking reaction of the tannin.

There is therefore a need to perfect a wood fiber panel which can overcome the disadvantages of the prior art as described above.

In particular, one purpose of the present invention is to provide a wood fiber panel, for example of the MDF type, which has a high percentage of wood fibers obtained from recycled wood material and which, at the same time, maintains a high surface quality.

Another purpose of the present invention is to provide a plant which allows to obtain a wood fiber panel, for example of the MDF type, with a high percentage of wood fibers obtained from wood material recycled in an optimized, efficient and highly productive manner.

Another purpose is to perfect a method to produce a wood fiber panel, for example of the MDF type, with a high percentage of wood fibers obtained from recycled wood material, guaranteeing a quality of the panel thus obtained that is comparable with that of a standard MDF panel.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the invention or variants to the main inventive idea.

In accordance with the above purposes, a panel of multilayer MDF (Medium Density Fiberboard) wood fiber, in accordance with the present invention, consist of at least three layers of which at least one internal core layer and two external layers disposed adjacent to the internal core layer on opposite parts with respect to each other, wherein the internal core layer comprises, or is formed by, recycled wood fiber, or a combination of recycled and virgin wood fiber, and the external layers comprise, or are essentially formed by, virgin wood fiber.

In this way, it is possible to use fiber originating from low quality wood raw material, that is, coming from recycled material, in order to produce at least the central layer of the panel while guaranteeing high quality surfaces substantially of virgin wood fiber or in any case comprising virgin wood fiber.

In some embodiments, the external layers as above have a respective thickness substantially the same as each other and the internal core layer has a thickness greater than the thickness of each of the external layers.

In some embodiments, the thickness of the internal core layer is greater than the sum of the thicknesses of each of the external layers.

In some embodiments, the fibers of the panel, in particular both the fibers of the internal core layer and also the fibers of the two external layers, are bonded by means of adhesives, in particular aminoplastics or isocyanate adhesives. Here and in this description, with the expression "aminoplastic adhesives" we mean adhesives formed by the reaction of an aldehyde with compounds containing amino or amide functional groups.

In some embodiments, the fibers of the panel, in particular both the fibers of the internal core layer and also the fibers of the two external layers, have a length of 50-8000 micrometers, in particular 100-4000 micrometers, and a diameter of 10-100 micrometers, in particular 15-60 micrometers.

In some embodiments, the fibers of the panel, in particular both the fibers of the internal core layer and also the fibers of the two external layers, are obtained through defibration by means of thermo-mechanical pulping.

In some embodiments, the fibers of the panel, in particular both the fibers of the internal core layer and also the fibers of the two external layers are distributed in a substantially random manner, without a preferential spatial orientation, so that the panel in fact has isotropic mechanical properties, at least with respect to the length and width of the panel itself.

In some embodiments, the internal core layer as above consists exclusively of recycled wood fibers, or a combination of recycled wood fibers and virgin wood fibers, bonded by means of aminoplastic or isocyanate adhesives, and the external layers consist exclusively of virgin wood fibers bonded by means of aminoplastic or isocyanates adhesives.

Some embodiments of the present invention provide a plant to produce a panel of multilayer MDF (Medium Density Fiberboard) wood fiber consisting of at least three layers of wood fiber, of which at least one internal core layer and two external layers disposed adjacent to the internal core layer on opposite sides with respect to each other.

According to one aspect of the invention, the plant comprises:
- two independent lines to feed wood fiber configured to respectively supply a first flow of wood fiber and a second flow of wood fiber;
- a station to form a multilayer assembly of aerated wood fiber, comprising in sequence in a direction of work: i) first depositing means able to deposit a first aerated layer of wood fiber coming from the first flow in order to form a first external layer, ii) second depositing means able to deposit a second aerated layer of wood fiber coming from at least the second flow in order to form the internal core layer above the first external layer, iii) third depositing means able to deposit a third layer of wood fiber coming from the first flow in order to form a second external layer above the internal core layer, obtaining a multilayer assembly of aerated wood fiber;
- hot-pressing means configured to press the multilayer assembly in order to compact the wood fiber and obtain a desired thickness;
- cutting means configured to cut to size the multilayer assembly thus pressed in order to obtain the panel.

Advantageously, the plant as above, since it provides two distinct and independent fiber production lines to feed the wood fiber intended to form the external layers and the internal core layer respectively, allows to differentiate the technological parameters of the production of the fiber of the external layers and of the internal core layer. By technological parameters we mean, for example, but not only, quality of the fiber, type and dosage of adhesives (for example thermosetting resins), type and dosage of additives, moisture of the fiber and other similar or comparable parameters.

Moreover, this solution allows to obtain an efficient and highly productive plant capable of producing panels, for example of the MDF type, of high quality even if they partly consist of recycled wood material.

Advantageously, a first wood fiber feed line is configured to supply the first flow comprising virgin wood fiber and a second wood fiber feed line is configured to supply the second flow of fiber comprising recycled wood or fiber obtained from a combination of recycled and virgin wood.

According to some embodiments, the first wood fiber feed line as above comprises at least one fiber preparation module configured to transform the wood into wood fiber through defibration by means of thermo-mechanical pulping, and the second wood fiber feed line comprises at least one respective fiber preparation module configured to transform the recycled wood into recycled wood fiber through defibration by means of thermo-mechanical pulping.

According to some embodiments, both the at least one fiber preparation module of the first wood fiber feed line, and also the at least one fiber preparation module of the second wood fiber feed line comprise a defibrator in which heated wood chips are centrifuged between refining discs, one fixed, the other in rotation, the discs being provided with wear segments with grooves through which the wood chips are forced, so that the friction forces that develop are such as to separate the individual fibers from each other.

According to some embodiments, both the at least one fiber preparation module of the first wood fiber feed line, and also the at least one fiber preparation module of the second wood fiber feed line are configured to add an adhesive to the fibers, in particular for example an aminoplastic or isocyanate adhesive.

According to some embodiments, the second wood fiber feed line comprises at least one station to clean the recycled wood upstream of the fiber preparation module or inside the fiber preparation module.

The present invention also concerns a method to produce a panel of multilayer MDF wood fiber consisting of at least three layers of wood fiber, of which one internal core layer and two external layers disposed adjacent to the internal core layer on opposite sides with respect to each other.

According to one aspect of the invention, the method comprises:
- feeding two independent flows, of which a first flow of wood fiber and a second flow of wood fiber;
- depositing in sequence: i) a first aerated layer of wood fiber coming from the first flow in order to form a first external layer, ii) a second aerated layer of wood fiber coming from at least the second flow in order to form the internal core layer above the first external layer, iii) a third aerated layer of wood fiber coming from the first flow in order to form a second external layer above the internal core layer obtaining a multilayer assembly of aerated wood fiber;
- hot-pressing the multilayer assembly in order to compact the wood fiber and obtain a desired thickness;
- cutting to size the multilayer assembly thus pressed in order to obtain the panel.

According to one embodiment, the first flow feeds at least virgin wood fiber and the second flow feeds at least recycled wood fiber, or a combinations of recycled wood fiber and virgin wood fiber, so that the external layers comprise, or are made of, virgin wood fiber and the internal core layer is made of recycled wood fiber, or a combination of recycled wood fiber and virgin wood fiber.

According to some embodiments, the first flow of wood fiber and the second flow of wood fiber as above are respectively prepared by transforming wood into wood fiber through defibration by means of thermo-mechanical pulping.

This method allows to produce a panel of multilayer wood fiber, for example of the MDF type, in a fast and continuous manner, guaranteeing high productivity.

In addition, this method allows to produce wood fiber panels with a high percentage of wood fibers obtained from recycled wood material guaranteeing at the same time a high quality of the panel thus obtained and a reduction in its production costs.

According to some embodiments, the defibration provides that heated wood chips are centrifuged between refining discs, one fixed, the other in rotation, the discs being provided with wear segments with grooves through which the wood chips are forced, so that the friction forces that develop are such as to separate the individual fibers from each other.

According to some embodiments, during the preparation of the wood fiber by means of defibration, an adhesive is added to the fibers, in particular for example an aminoplastic or isocyanate adhesive.

According to some embodiments, the fibers used, in particular both the fibers of the internal core layer and also the fibers of the two external layers, have a length of 50-8000 micrometers, in particular 100-4000 micrometers, and a diameter of 10-100 micrometers, in particular 15-60 micrometers. Furthermore, in some embodiments, the fibers used, in particular both the fibers of the internal core layer and also the fibers of the two external layers, are distributed in a substantially random manner, without a preferential spatial orientation, so that the panel in fact has isotropic mechanical properties, at least with respect to a length and a width of the panel itself.

### ILLUSTRATION OF THE DRAWINGS

These and other aspects, characteristics and advantages of the present invention will become apparent from the following description of some embodiments, given as a non-restrictive example with reference to the attached drawings wherein:
- fig. 1 is a top view of a wood fiber panel in accordance with the present description;
- fig. 2 is a lateral section along line II-II of fig. 1;

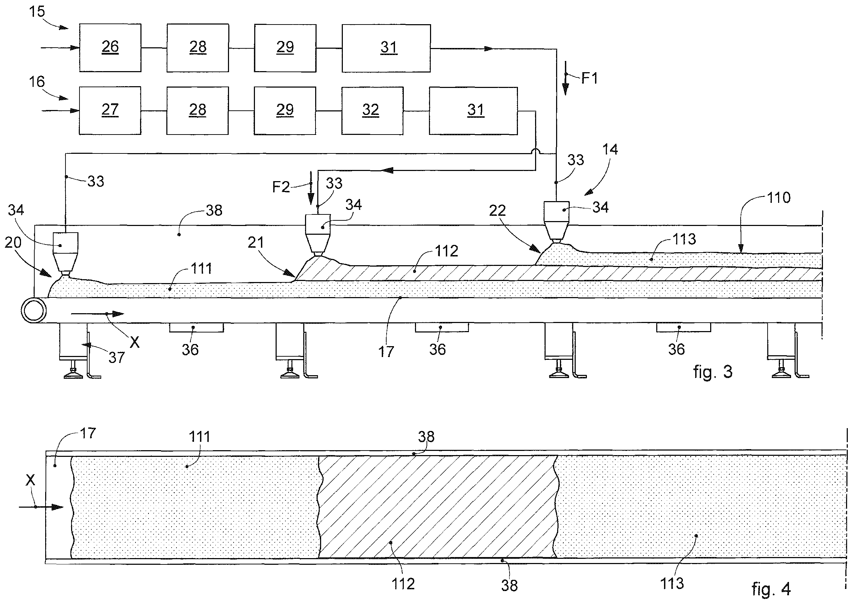

- fig. 3 is a schematic view of a plant to produce a wood fiber panel in accordance with the present invention;
- fig. 4 is a top view of a component of the plant of fig. 3;

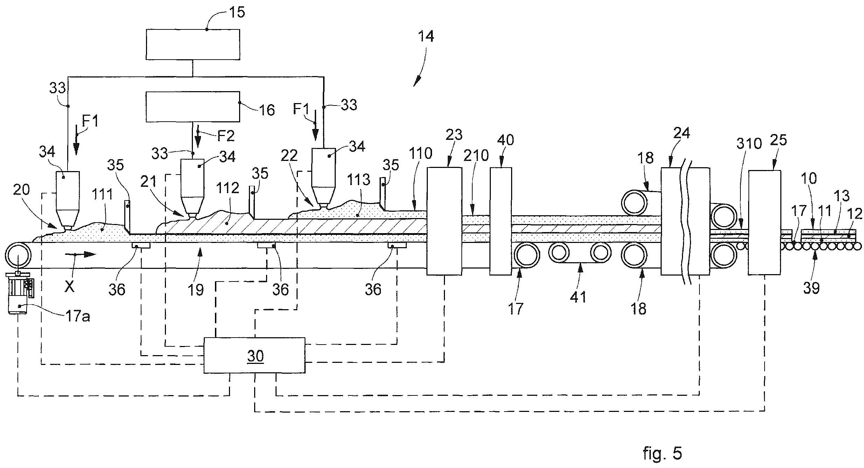

- fig. 5 is another schematic view of an embodiment of the plant to produce a wood fiber panel of fig. 4;
- fig. 6 is a block diagram of an embodiment of a part of the method to produce a panel of multilayer wood fiber in accordance with the present invention.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF EMBODIMENTS

We will now refer in detail to the possible embodiments of the invention, of which one or more examples are shown in the attached drawings. Each example is supplied by way of illustration of the invention and shall not be understood as a limitation thereof. For example, one or more characteristics shown or described insomuch as they are part of one embodiment can be varied or adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

With reference to the attached drawings 1-2, embodiments are described of a panel 10 of wood fiber of the multilayer type in accordance with the present description.

By wood fiber panel here and hereafter in the description we mean a panel essentially formed by single, very fine wood fibers bonded together by particular adhesives, or resins, described in detail below, which make the whole extremely compact. Panels of this type are generally MDF (Medium Density Fiberboard), but LDF (Low Density Fiberboard) or HDF (High Density Fiberboard) are also not excluded. Here and hereafter in the description, we will refer by way of example to panels of the MDF type.

In the case of MDF panels in accordance with the present description, in particular, the orientation of the fibers is substantially isotropic, at least in the longitudinal and transverse planes, thus giving rise to a material with very similar mechanical characteristics in the two mentioned directions.

The MDF panel according to the present description is produced starting from single wood fibers or other lignocellulosic materials obtained by means of TMP (Thermo-Mechanical-Pulping) defibration and generally have sizes of 50-8000 micrometers in length, in particular 100-4000 micrometers, and of 10-100 micrometers in diameter, in particular 15-60 micrometers.

The panel 10 is advantageously multilayer and comprises at least three layers of which at least one internal core layer 12 and two external layers 11, 13 disposed adjacent in contact with the internal core layer 12 on opposite sides with respect to each other. In some specific embodiments, the panel 10 consists exclusively of the three layers 11, 12, 13, that is, the internal core layer 12 and the two external layers 11, 13.

In the embodiments described here, the two external layers 11, 13 are disposed adjacent, respectively on one side and the other side of, that is, above and below, the internal core layer 12, and in contact therewith, in order to define a "sandwich" structure.

Advantageously, according to some embodiments, the external surface layers 11, 13 comprise, or are obtained from, virgin wood fiber. For example, the external layers 11, 13 can consist exclusively of virgin wood fiber, without however excluding the possibility that they also contain a portion of recycled wood fiber, that is, that they can comprise, or be formed by, a portion of virgin wood fiber and a portion of recycled wood fiber. Advantageously, in such cases, the portion of virgin wood fiber in the external layers 11, 13 can be greater, even by a large extent, than the portion of recycled wood fiber.

By virgin wood we mean, here and hereafter in the description, wood obtained from crops, woods, forests or suchlike which therefore has not previously been used for other purposes, or wood that may have undergone cutting and/or primary working processes only of the mechanical type, such as chips, trimmings and/or heads of logs, comprising or not comprising the bark, coming from sawmills.

According to one embodiment in accordance with the present invention, the internal core layer 12 comprises, or is formed by, or is produced starting from, recycled wood fiber or from a combination of recycled and virgin wood fiber.

According to a possible alternative embodiment, the internal core layer 12, on the other hand, comprises, or is formed by, or is produced starting from, fiber of virgin wood of lower quality.

According to one embodiment, the recycled wood fiber used for the internal core layer 12 can be produced starting from recycled wood of any granulometry or size whatsoever, which for example can come from industrial workings or scraps from industrial workings, from packaging, from used furnishing elements or furniture, from building materials, agricultural and forestry waste or from public or private green areas in general and/or post-consumption, in particular from recycling collection and/or post-consumption sorting.

By way of a non-limiting example, the recycled wood can come from bark and/or cork scraps, sawdust, shavings, residues from cutting of wood material, chipboard panels, MDF panels, veneers, and also from recovered wood material of various kinds coming from packaging, demolition, recycling collection, workings of logs and/or solid wood and/or plywood, forestry operations or cleaning of roads, public green spaces, river beds and beaches, working of raw, embellished and coated chipboard or MDF panels, veneers, wood packaging.

According to one embodiment, the panel 10 can comprise overall between 15% and 75% by weight of fiber obtained from recycled wood, where the percentage values refer to the overall weight of the panel.

In particular, the core layer 12 can contain up to 100% of fiber from recycled wood but can also contain a portion of recycled wood and a portion of virgin wood, in any case maintaining the external layers 11, 13 of the panel 10 with unaltered quality compared to a classic single-layer fiber panel known in the state of the art and made entirely of virgin wood fiber.

According to one embodiment, the external layers 11, 13 have a respective thickness SL1, SL2, which can favorably be substantially the same as each other.

According to one embodiment, the internal core layer 12 has a thickness CL which is greater than the thickness SL1, SL2 of each of the external layers 11, 13. Favorably, moreover, the thickness CL of the internal core layer 12 can be even greater than the sum of the thicknesses SL1 and SL2.

In particular, in possible implementations, the ratio between the thickness CL of the internal core layer 12 and the sum of the thicknesses SL1, SL2 of the two external layers 11, 13, that is, in terms of the formula CL/(SL1 + SL2), is greater than 1, preferably comprised between 1.2 and 20 and more particularly between 2.0 and 8.0.

The overall thickness of the panel 10, considering the sum of the thicknesses SL1, SL2 of the external layers 11, 13 and the thickness CL of the internal core layer 12, can be comprised between 2 and 80 mm, in particular between 5 and 70 mm, more particularly between 10 and 60 mm.

In some embodiments, the fibers of the panel 10, in particular both the fibers of the internal core layer 12 and also the fibers of the two external layers 11, 13, are bonded by means of adhesives, for example aminoplastics, that is, adhesives formed by the reaction of an aldehyde with compounds containing amino or amide functional groups.

Examples of aminoplastic adhesives as intended here are urea-formaldehyde (UF), melamine-urea-formaldehyde (MUF) and melamine-formaldehyde (MF).

Other possible examples of adhesives that can be used in the embodiments described here are one or more of either: adhesives belonging to the class of isocyanates, in particular diphenylmethane diisocyanate in polymeric form (pMDI), or epoxy adhesives, whether of artificial or vegetable origin, or adhesives derived from lignin, adhesives derived from proteins, phenolic adhesives, for example phenol-formaldehyde (PF).

It is understood that, in possible embodiments, it is also possible to contemplate adhesives formed by the mixture of one or more of the adhesives described above.

In some embodiments, the fibers of said panel 10, in particular both the fibers of the internal core layer 12 and also the fibers of the two external layers 11, 13, have a length of 50-8000 micrometers, in particular 100-4000 micrometers, and a diameter of 10-100 micrometers, in particular 15-60 micrometers.

In some embodiments, the fibers of said panel 10, in particular both the fibers of the internal core layer 12 and also the fibers of the two external layers 11, 13, are obtained through defibration by means of thermo-mechanical pulping.

In some embodiments, the fibers of said panel 10, in particular both the fibers of the internal core layer 12 and also the fibers of the two external layers 11, 13, are distributed in a substantially random manner, without a preferential spatial orientation, so that the panel has mechanical properties which are in fact isotropic, at least with respect to the length and width of the panel 10 itself.

In some embodiments, the internal core layer 12 consists exclusively of recycled wood fibers, or a combination of fibers from recycled wood and fibers from virgin wood, bonded by means of adhesives, in particular for example aminoplastic or isocyanate adhesives, and the external layers 11, 13 consist exclusively of virgin wood fibers bonded by means of an adhesive, in particular for example aminoplastic or isocyanate adhesives.

According to one aspect of the invention, a plant 14 to produce the panel 10 of multilayer MDF wood fiber according to the present description comprises:
- two independent lines 15, 16 to feed wood fiber configured to respectively supply a first flow F1 of wood fiber and a second flow F2 of wood fiber;
- a station 19 to form a multilayer assembly 110 of aerated wood fiber;
- hot-pressing means 24 configured to hot press the multilayer assembly 110 in order to compact the wood fiber and obtain a desired thickness;
- cutting means 25 configured to cut to size the multilayer assembly 110 thus pressed in order to obtain the panel 10.

According to one embodiment in accordance with the present invention, the forming station 19 comprises in sequence in a direction of work X:
i) first depositing means 20 able to deposit a first aerated layer 111 of wood fiber coming from the first flow F 1 in order to form a first external layer 11,
ii) second depositing means 21 able to deposit a second aerated layer 112 of wood fiber coming from at least the second flow F2 in order to form the internal core layer 12 above the first external layer 11,
iii) third depositing means 22 able to deposit a third aerated layer 113 of wood fiber coming from the first flow F1 in order to form a second external layer 13 above the internal core layer 12 obtaining the multilayer assembly 110 of aerated wood fiber.

Here and in the present description, with the term "aerated" we mean that the wood fiber material deposited for each layer, and the multilayer assembly thus obtained, has a high content of air incorporated in the material that is deposited and formed, regardless of the forming system. Such forming can normally occur by means of mechanical deposition of the fibers by gravity, or pneumatically. As better explained below, the multilayer assembly 110 of aerated wood fiber is subsequently compacted and de-aerated.

In particular, the plant 14 to produce panels of multilayer fiber comprises a first wood fiber feed line 15 configured to produce the first flow F1 comprising virgin wood fiber and a second wood fiber feed line 16 configured to produce the second flow F2 comprising recycled wood fiber or a combination of recycled and virgin wood fiber.

Consequently, the first and third depositing means 20, 22 are fed with the same wood fiber, which can be exclusively virgin wood fiber, or it can comprise virgin wood fiber or recycled wood fiber, coming from the first wood fiber feed line 15, reducing energy consumption and optimizing the size and efficiency of the plant 14.

As stated, in possible embodiments, the external layers 11, 13 can consist of virgin wood fiber, or include virgin wood fiber and recycled wood fiber, according to desired proportions. If the external layers 11, 13 also comprise a portion of recycled wood fiber, this recycled wood fiber can come from the second flow F2 supplied by the second wood fiber feed line 16 or from another wood fiber feed line.

According to a possible embodiment, the first and third depositing means 20, 22 can possibly be associated with two wood fiber feed lines 15 comprising virgin wood which are independent from each other.

According to one embodiment, the first and second wood fiber feed lines 15, 16 are configured to be controlled and managed in a different and independent manner so as to treat, in a suitable manner, virgin wood and recycled wood respectively.

The first wood fiber feed line 15 can comprise at least one warehouse, or storage area, of virgin wood 26. Possibly, the first wood fiber feed line 15 can draw virgin wood from several warehouses or storage areas. As stated, possibly the first wood fiber feed line 15 can also receive a portion of recycled wood fiber.

The second wood fiber feed line 16 can comprise at least one warehouse, or storage area, of recycled wood 27 and, where appropriate, of recycled wood combined with virgin wood. Possibly, the second wood fiber feed line 16 can draw recycled wood, or recycled wood combined with virgin wood, from several warehouses or storage areas.

According to one embodiment, the first and second wood fiber feed lines 15, 16 each comprise at least one chipping station 28 to chipp virgin wood and recycled wood respectively.

According to one embodiment, the first and second wood fiber feed lines 15, 16 each comprise at least one sifting station to suitably select the chipped wood by selecting, for example, wood fragments of a similar size.

The heavy inert materials present in the wood can also be removed in the sifting station.

The sifting station 29 can be provided downstream of the chipping station 28.

According to one embodiment, the first and second wood fiber feed lines 15, 16 each comprise a fiber preparation module 31 configured to transform the wood into wood fiber, whether it is virgin wood, recycled wood or combinations thereof, according to requirements.

The fiber preparation module 31 can be located downstream of the chipping station 28 and of the sifting station 29.

In particular, in each fiber preparation module 31 the wood is reduced to fiber and adhesives are added to it, for example thermosetting resin, in order to obtain respectively virgin wood fiber and recycled wood fiber suitable to form the panel 10 of fiber.

In particular, the fiber preparation module 31 is configured to perform a process of thermo-mechanical pulping (TMP) defibration able to produce single wood fibers or other lignocellulosic materials. These fibers have a length of 50-8000 micrometers, in particular 100-4000 micrometers, and a diameter of 10-100 micrometers, in particular 15-60 micrometers. In particular, by means of the TMP defibration operation, the fiber is produced through defibration, separating the individual fibers that make up the wood from each other. The TMP defibration operation provides to use a defibrator, for example of the Asplund type. The method does not provide "cutting" actions and, in the case of MDF, it starts with wood chips that are heated (preheater steaming or digesting) under saturated steam pressure at about 8 bar-g and 175 °C for a time ranging from 30" to 5min with the aim of softening the lignin present in the median lamellae that join the fibers, so as to then be centrifuged between refining discs, one fixed, the other in rotation, with an adjustable gap between the two in the order of a few tenths of a millimeter. These discs are provided with wear segments with suitable grooves through which the wood chips are forced; the friction forces that develop are such as to separate the individual fibers from each other.

In accordance with some examples according to the present description, the adhesive used in the fiber preparation module 31 according to the embodiments described here can be, in particular, an aminoplastic or isocyanate adhesive as defined here or possibly other adhesives in accordance with the present description.

In particular, both the at least one fiber preparation module 31 of the first wood fiber feed line 15, and also the at least one fiber preparation module 31 of the second wood fiber feed line 16 are configured to add an adhesive to the fibers, for example an aminoplastic or isocyanate adhesive or possibly other adhesives in accordance with the present description.

The recycled wood, since it is very heterogeneous, may need further workings than virgin wood. Consequently, the fiber preparation module 31 for the recycled wood can be suitable to regulate the production of the fiber according to the parameters of the recycled wood entering said module and the parameters of the wood fiber exiting said module to be obtained, for example, but not only, the level of moisture and the size of the fibers.

In particular, the first and second wood fiber feed lines 15, 16 are configured to produce fiber autonomously and independently according to the technological parameters of the process, such as for example the quantity of fiber, the size of the individual fibers and the quality of the panel 10. In this way, it is possible to differentiate the technological parameters for the production of the external layers 11, 13 and of the internal core layer 12, such as for example the refining energy of the fiber and therefore the quality of the fiber, type and dosage of adhesives, type and dosage of additives, moisture of the fiber, etc....

In accordance with some embodiments, the second wood fiber feed line 16 advantageously comprises, upstream of the fiber preparation module 31, at least one cleaning station 32 configured to remove polluting materials from the recycled wood.

In this way, advantageously, the recycled wood is suitably treated before entering the fiber preparation module 31, obtaining a recycled wood fiber of a quality suitable to make wood fiber panels 10.

By pollutants we mean materials other than wood, such as for example ferrous and non-ferrous metals and their alloys, inert materials (for example stones, glass, minerals, etc....), papers, melamine papers, plastic films, plastic materials of various nature and composition, paints, fabrics and similar or comparable materials.

In particular, the recycled wood material is generally rich in such pollutants and in order to be used in the production of fiber panels 10 it needs to be adequately cleaned.

According to one embodiment, the cleaning station 32 can include at least one or more of the following cleaning devices:
- magnetic separators to remove ferromagnetic materials
- eddy current separators to remove non-ferromagnetic materials,
- gravimetric separators to remove inert materials;
- optical and/or infrared sorting machines to remove plastic materials.

According to one embodiment, in the cleaning station 32 there can also be provided one or more cleaning devices selected from a group comprising: vibrating and/or oscillating screens, X-ray transmission or fluorescence sorting machines, air-type separators, densimetric tables or others similar and comparable devices.

The cleaning station 32 can be provided before the recycled wood warehouse 27, or between the recycled wood warehouse 27 and the chipping station 28, or between the chipping station 28 and the sifting station, or between the sifting station and the fiber preparation module 31, or, again, inside the fiber preparation module 31. According to one embodiment, the second wood fiber feed line 16 can provide one or more cleaning stations 32 between one station and the next upstream of the fiber preparation module 31, or inside the module 31 itself.

In accordance with some embodiments, the plant 14 is provided with an overall transport system to continuously move the fibers deposited along the various working steps described here. This overall transport system includes a conveyor 17, for example a conveyor belt, which affects the forming station 19 and possible pre-pressing means 23 described below, in order to continuously feed the material.

According to possible implementations, a conveyor 18 can also be part of this overall transport system of the plant 14, for example of the double conveyor belt type, in order to continuously move the material along the hot-pressing means 24.

Between the conveyor 17 and the conveyor 18 there can also be at least one other transfer conveyor 41. Downstream of the conveyor 18 there can be provided other transport means 39, for example roller conveyors, present both between the pressing means 24 and also the cutting means 25, as well as downstream of the cutting means 25.

In particular, the conveyor 17 is associated with the forming station 19 of the plant 14, it is mobile in the direction of work X and it is configured to receive in succession the plurality of aerated layers 111, 112, 113 of wood fiber deposited and coming from the first and second wood fiber feed lines 15, 16 and to feed them in the direction of work X.

In particular, the conveyor 17 is configured to advance continuously at least between the first depositing means 20, the second depositing means 21 and the third depositing means 22 so as to determine the continuous and sequential depositing of the first aerated layer 111 of fiber, of the second aerated layer 112 of fiber and of the third aerated layer 113 of fiber onto the conveyor 17.

These aerated layers 111, 112, 113 of fiber are substantially incoherent layers of wood fiber.

In particular, the conveyor 17 is associated with a support frame 37 and comprises an actuator member 17a configured to move, with respect to the support frame 37, said conveyor 17 in the direction of work X.

The conveyor 17 can comprise fixed lateral containing walls 38 associated with the support frame 37 and configured to prevent the wood fiber, deposited onto the conveyor 17, from escaping from the conveyor 17.

Furthermore, the conveyor 17 has a width, comprised between the lateral containing walls 38, equal to or greater than the width of the panel 10 to be obtained.

In particular, the forming station 19, the possible pre-pressing means 23, the hot-pressing means 24 and the cutting means 25 are disposed fixed and sequentially along the overall transport system of the plant 14, in order to move the material deposited and treated from the forming station 19 toward the cutting means 25 in the direction of work X.

The depositing means 20, 21, 22, respectively comprise at least one fiber transport and feed system 33 connected to the respective wood fiber feed lines 15, 16. Without losing generality, the fiber transport and feed system 33 can for example include one or more metering ducts, for example in the case of the internal core layer 12 and in the case of the external layers 11, 13 in addition to the ducts, also screw-type mechanical transport systems.

In particular, the fiber transport and feed system 33 can, by way of example, be disposed at least partly directly above the conveyor 17; nothing prevents, however, another disposition from being provided.

Furthermore, the fiber transport and feed system 33 can be configured to uniformly deposit the respective aerated layers 111, 112, 113 of fiber onto the conveyor 17, mobile in the direction of work X, covering its entire width.

In particular, the depositing means 20, 21, 22 can respectively comprise at least one metering member 34, for example a metering bunker and forming head for a homogeneous distribution onto the conveyor 17, connected to the respective fiber transport and feed system 33 and configured to uniformly deposit the respective aerated layers 111, 112, 113 of fiber onto the conveyor 17 covering its entire width while said conveyor 17 moves in the direction of work X toward the cutting means 25.

The metering members 34 are suitable to deliver wood fiber at adjustable flow rates.

In particular, the metering member 34 connected to the second wood fiber feed line 16 can be configured to deliver a greater quantity of fiber of recycled wood, or a combination of fiber from recycled and virgin wood, compared to the quantity of wood fiber, virgin or combined with recycled, delivered by the metering members 34 connected to the first wood fiber feed line 15.

The plant 14 can comprise at least one shaving member 35 disposed in succession after respective depositing means 20, 21, 22 in the direction of work X and configured to superficially shave a respective aerated layer 111, 112, 113 of fiber so as to level it, making its upper surface substantially smooth and even. The operation of levelling the material can occur with or without removal thereof. In particular, each shaving member 35 is disposed downstream of the respective fiber transport and feed system 33.

In this way, the shaving member 35 is configured to flatten and level the surface of each aerated layer 111, 112, 113 of fiber while the latter continues in the direction of work X, guaranteeing a multilayer assembly 110 with well-defined aerated layers 111, 112, 113 of fiber without surface undulations.

According to one embodiment, the plant 14 comprises a weighing device 36 disposed, in the direction of work X, in succession after each of the respective depositing means 20, 21, 22. Each weighing device 36 is configured to control the respective metering member 34.

The weighing device 36 is integral with the support frame 37 and disposed below the conveyor 17 mobile with respect to the support frame 37.

The weighing device 36 is configured to detect the weight of each respective aerated layer 111, 112, 113 of fiber deposited onto the conveyor 17.

In particular, each weighing device 36 is configured to detect the surface weight, expressed as kg/m², of the respective deposited layer 111, 112, 113, it compares it with a pre-set weight value (set-point) and consequently adjusts the metering member 34 and/or the shaving member 35. The detection of the weight of each respective aerated layer 111, 112, 113 of fiber occurs while the latter continuously transits, integrally with the conveyor 17, in the direction of work X.

In particular, the plant 14 provides at least one weighing device 36 located downstream of each metering member 34.

According to one embodiment, the plant 14 can comprise a command and control unit 30 configured to manage the functioning of the forming station 19, of the pressing means 24 and of the cutting means 25 provided in the direction of work X and of the conveyor 17 by means of the actuator member 17a.

Each weighing device 36 can be configured, for example, to detect the weight of the aerated wood fiber material, given by the presence of the one or more aerated layers 111, 112, 113 of fiber on the conveyor 17, at the point where the weighing device 36 itself is installed, and communicate it to the command and control unit 30 for the purpose of controlling the respective metering member 34 as described above.

In particular, the command and control unit 30 can be configured to calculate the actual weight of each aerated layer 111, 112, 113 of fiber by difference between the detections carried out by the weighing devices 36 respectively after the depositing of the fiber by means of the first, second and third depositing means 20, 21, 22.

These detections can be used to control and adjust the metering members 34 of the three depositing means 20, 21, 22 in order to guarantee the feed onto the conveyor 17 of the correct quantity of wood fiber in order to obtain the desired panel 10. In fact, this command and control unit 30 can be configured to adjust the flow rate of the metering members 34.

According to one embodiment, the plant 14 can comprise pre-pressing means 23 disposed upstream of the pressing means 24 in the direction of work X. The pre-pressing means 23 are configured to compact the multilayer assembly 110 of aerated layers, making it suitable for treatment by means of the pressing means 24. In particular, the pre-pressing means 23 are configured to compress the multilayer assembly 110, compacting and de-aerating it.

The pre-pressing means 23 can comprise a pre-pressing machine suitable to compact a multilayer assembly 110 of aerated layers that is even one meter high, or more, obtaining a compacted assembly of aerated layers 210 suitable for the subsequent workings.

According to one embodiment, the hot-pressing means 24 are configured to hot-press, typically continuously, the compacted assembly of aerated layers 210. In particular, the pressing means 24 are configured to press, compact and solidify the compacted assembly of aerated layers 210 that is continuously advancing, previously pre-pressed by the pre-pressing means 23, in order to obtain a typically continuous panel 310 of multilayer wood fiber.

In accordance with one embodiment, the plant 14 can be provided with a trimming unit 40 disposed downstream of the pre-pressing means 23 and upstream of the pressing means 24 and configured to trim at least the sides of the compacted assembly of aerated layers 210. The method described here, therefore, can include trimming at least the sides of the compacted assembly of aerated layers 210 after the pre-pressing and prior to the hot-pressing step.

Advantageously, in some embodiments, it is provided to recover the waste material that is produced by trimming, by means of the trimming unit 40, at least the sides of the compacted assembly of aerated layers 210 after the pre-pressing. The recovery of this material allows its subsequent introduction into the second flow F2, merging with the deposit of wood fiber coming from at least said second flow F2. To this end, the plant 14 can include means to recover the wood fiber eliminated by the trimming at least of the sides of said compacted assembly of aerated layers 210 and its subsequent introduction into the second flow F2 merging with the deposit of wood fiber coming from at least said second flow F2.

In some embodiments, the pressing means 24 can include, for example but not only, a continuous press heated by means of diathermic oil. This press can be provided with two opposite mobile conductor belts that draw, press and heat the compacted assembly of aerated layers 210 as it advances in the direction of work X.

In particular, the pressing means 24 comprise a hot press which, in addition to compressing the compacted assembly of aerated layers 210, also heats it, activating the resin, for example but not exclusively, thermosetting resin, present in the fiber and therefore solidifying the multilayer assembly 110 of aerated layers itself until the continuous compact panel 310 is obtained.

According to one embodiment, the cutting means 25 are configured to cut the continuous panel 310 of multilayer wood fiber to size, in order to obtain the panel 10 of multilayer wood fiber.

The plant 14 can provide a cooling station (not shown) in which the panels 10 are adequately cooled by cooling means, or even by natural convection alone, and a storage station (not shown) in which the panels 10 obtained in such plant 14 are positioned.

The plant 14 could also provide one or more surface finishing stations (not shown) of the panel 10 to smooth the surfaces and/or opacify them and/or polish them and/or embellish them with melamine papers or other similar operations.

According to one aspect of the invention, a method to produce a panel 10 of multilayer wood fiber comprises:
- feeding two independent flows, of which a first flow F1 of wood fiber and a second flow F2 of wood fiber;
- depositing in sequence:
   i) wood fiber coming from the first flow F1 in order to form a first external layer 11,
   ii) wood fiber coming from at least said second flow F2 in order to form the internal core layer 12 above the first external layer 11,
   iii) wood fiber coming from the first flow F1 in order to form a second external layer 13 above the internal core layer 12 obtaining a multilayer assembly 110 of aerated wood fiber;
- pressing the multilayer assembly 110 in order to compact the wood fiber and obtain a desired thickness;
- cutting to size the multilayer assembly 110 thus pressed in order to obtain the panel 10.

According to one embodiment, the first flow F1 feeds at least virgin wood fiber and the second flow F2 feeds recycled wood fiber, or a combination of recycled and virgin wood fiber, so that the external layers 11, 13 comprise at least, or are made of, virgin wood fiber and the internal core layer 12 is made of recycled wood fiber, or a combination of recycled and virgin wood fiber.

According to one embodiment, the method comprises a continuous advance of the wood fiber deposited at least in correspondence with first depositing means 20, second depositing means 21 and third depositing means 22 for the continuous and sequential depositing of the first aerated layer 111 of fiber, of the second aerated layer 112 of fiber and of the third aerated layer 113 of fiber.

According to one embodiment, in order to feed the two independent flows F1, F2, the method provides to make virgin wood and recycled wood available. The step of making virgin wood and recycled wood available can comprise the collection, transport and storage of the virgin wood and recycled wood in their respective warehouses 26, 27.

In particular, the step of making the wood fiber available comprises feeding at least virgin wood and recycled wood respectively to the first fiber feed line 15 and to the second fiber feed line 16 in recycled wood and/or in combinations of virgin and recycled wood, independent of the first wood fiber feed line 15.

According to one embodiment, the method comprises, before the step of feeding the two independent flows F1, F2, producing virgin wood and recycled wood fiber. In particular, the production of fiber is carried out after the step of making virgin wood and recycled wood available.

The production of wood fiber for the first flow F1, which as stated can be virgin wood fiber or possibly also include recycled wood fiber, and the production of recycled wood fiber and/or fiber from combinations of virgin and recycled wood for the second flow F2, are carried out independently of each other.

The step of producing virgin wood and recycled wood fiber is carried out respectively along the first wood fiber feed line 15 and the second wood fiber feed line 16.

The production of fiber can comprise chipping the wood made available.

In the case of recycled wood, before chipping there can be provided a prior crushing of the recycled wood material. In fact, the recycled wood material is heterogeneous and comes from different uses and applications so that it has different sizes and compositions.

The production of fiber can comprise sifting the wood, once it has been chipped, in order to divide the fragments of chipped wood according to their size and possibly eliminate the inert materials contained in the wood.

This sifting can be performed, for example but not only, by means of sifting rollers, vibrating tables, oscillating tables, air-type classifiers or other gravimetric screens suitable to sort the wood fragments into different classes of size.

The production of fiber can comprise washing the wood chips obtained from chipping in order to make them more easily workable.

The production of fiber can also comprise a step of preheating, by means of steam, the previously washed wood chips, in order to prepare it for the subsequent working steps.

The production of virgin and recycled wood fiber comprises respectively the defibration of the virgin wood chips and recycled wood chips, once washed and preheated, in order to obtain respectively the virgin wood fiber and the recycled wood fiber, or a combination of fiber obtained from virgin wood and recycled wood. The production of fiber also comprises the resin finish of the wood, once defibrated, by adding an adhesive or resin, for example thermosetting, to the wood fiber. Advantageously, this resin is activated by heat, during hot-pressing, gluing the wood fibers together.

According to a possible embodiment, the resin finish can normally be carried out before a step of drying the wood fiber in order to remove the excess moisture present in it, but it can also take place during and after drying, or it can take place partly before and partly during and after this drying step.

The steps of washing the chips, preheating, defibration, resin finishing and drying can be carried out with technological parameters that are different for recycled wood or a combination of recycled and virgin wood, compared to virgin wood, for example recycled wood could require a more intense defibration than virgin wood and/or could require the introduction, in one or more of the steps as above, of specific additives to adequately treat the recycled wood in order to make it suitable for subsequent workings and to produce the panel 10.

According to one possible embodiment, after the resin finishing, there can be provided a gravimetric separation of the wood fiber, with thermosetting resin added to it, in order to remove hardened lumps of resin which could damage the quality of the panel 10 to be obtained.

According to one embodiment, the production of recycled wood fiber comprises at least one step of cleaning the wood in order to remove the polluting materials carried out at least before defibration.

According to one embodiment, the production of recycled wood fiber comprises at least one step of cleaning the wood in order to remove the polluting materials before or after chipping.

In particular, recycled wood to produce recycled wood fiber has to be previously prepared by subjecting it to specific cleaning operations, in order to remove heterogeneous materials, such as metals, plastics, glass or inert materials, which could compromise the quality of the final panel.

According to one embodiment, the production of recycled wood fiber comprises one or more steps of cleaning the wood in order to remove polluting materials.

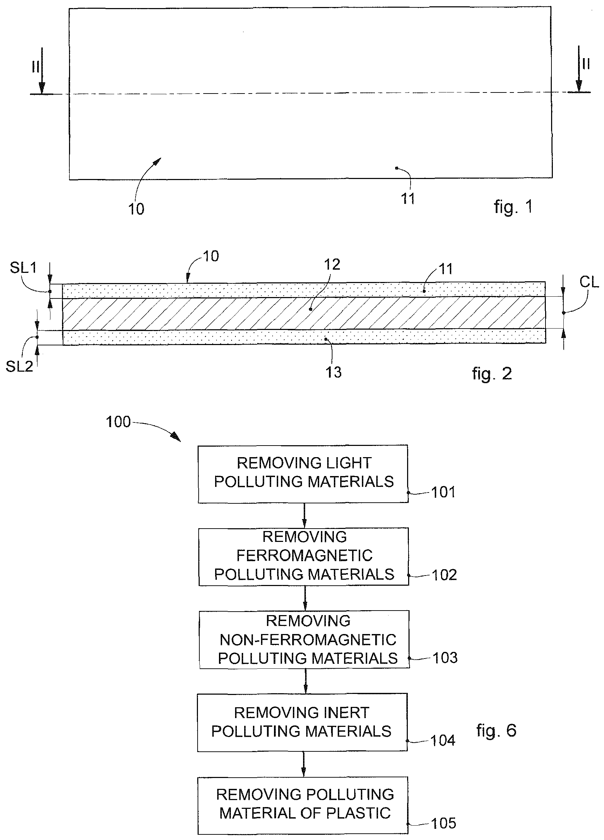

According to one embodiment, with reference to fig. 6, the cleaning step, indicated by way of example with the number 100, comprises one or more of the following sub-steps:
- sub-step of sifting and removing 101 light polluting materials, such as for example, but not only, paper, light plastics, nylon, fabric or suchlike;
- sub-step of removing 102 ferromagnetic polluting materials;
- sub-step of removing 103 non-ferromagnetic polluting materials;
- sub-step of removing 104 inert polluting materials, such as for example, but not only, stones, glass or suchlike;
- sub-step of removing 105 polluting material made of plastic, rubber or, in general, polymers foreign to the wood raw material.

The cleaning step 100 is performed in the cleaning station 32.

The sifting and removal of the light polluting materials 101, such as for example fabric, plastic or paper can exploit the different density of the light polluting materials with respect to the wood material. For example, the removal of the light polluting materials 101 can provide to use gravimetric screens (for example roller screens, vibrating tables or similar or comparable devices) or air-type screens so that these pollutants can be removed respectively by exploiting gravity or by blowing.

The sub-step of removing 102 metal polluting materials of the ferromagnetic type can provide to use at least one magnetic separator, for example of the known type with a drum or roller or magnetic strip, configured to remove ferrous metal polluting materials by means of at least one magnet that has a core of ferrite or preferably of neodymium or other magnetic alloys.

The sub-step of removing 103 non-ferromagnetic metal polluting materials can provide, for example, to use at least one eddy current or induced current separator. Such eddy current separators are configured to remove the non-ferromagnetic metal materials by generating a suitable magnetic field that generates an action of distancing or repelling the non-ferromagnetic material with respect to the source of the magnetic field.

The sub-step of removing 104 inert polluting materials, for example stones, glass, paper, fabrics or suchlike, and plastic material can provide to use oscillating, vibrating or gravity screens. In addition to this, such inert materials can be identified by X-rays and removed, for example, by blowing or dropping. For example, a blowing device can be provided suitable to impart a different direction to such inert materials, with respect to the flow of the material, so as to remove them.

X-rays advantageously allow to also identify wood materials that have embedded pollutants, for example a screw or a nail or in general metal attachment means, inside a piece of wood, guaranteeing a high percentage of removal of the pollutants present in the recycled wood.

Furthermore, the plastic materials (sub-step 105) can be identified by means of infrared technology (for example NIR - Near InfraRed) possibly in cooperation with a laser beam, and removed by means of, for example, blowing or dropping.

In this way, the cleaning step 100 allows to obtain a recycled wood material substantially free of any kind of pollutant whatsoever, guaranteeing to obtain a good quality wood fiber even if it comes from non-virgin wood. Furthermore, the almost total removal of pollutants allows to use, for the recycled wood, machinery and technologies similar to those to produce fiber starting from virgin wood.

According to one embodiment, the method provides that the three aerated layers 111, 112, 113 of wood fiber are deposited in sequence one on top of the other on the mobile conveyor 17, in order to form what in the technical jargon of this specific sector of the art is called a "mattress", that is, a multilayer assembly 110 of aerated layers.

According to one embodiment, the deposit of wood fiber coming from at least the second flow F2 provides to deposit a certain quantity of fiber from recycled wood or from a combination of recycled and virgin wood, which for example can be greater than the quantity of fiber of virgin wood deposited during the depositing of wood fiber coming from the first flow F1.

After each deposit of a respective aerated layer 111, 112, 113, intended to define the external layers 11, 13 of fiber and the internal core layer 12, there can be provided a corresponding step of shaving each respective aerated layer 111, 112, 113 in order to level or trim the surface of the aerated layer 111, 112, 113, while the latter is transported by the conveyor 17 toward the subsequent working step provided in the direction of work X. This allows to obtain a deposited aerated layer which substantially has a continuous rectangular shape, following the movement of the conveyor 17, and which is uniform and well distributed over the entire width of the conveyor 17.

According to one embodiment, the method can provide to recover the wood fiber eliminated by the shaving, at least of the second aerated layer 112, and to subsequently introduce it into the second flow F2, merging with the deposit of wood fiber coming from at least said second flow F2. To this end, the plant 14 can include means to recover the wood fiber eliminated by said shaving, at least of the second aerated layer 112, and to subsequently introduce it into the second flow F2 of recycled wood fiber, merging with the deposit of wood fiber coming from at least said second flow F2.

Consequently, the wood fiber eliminated by the trimming, at least of the second aerated layer 112, is recovered and reintroduced into the second aerated layer 112 intended to form the internal core layer 12 of the panel 10. In this way, the external layers 11, 13 of the panel 10 are not contaminated by recycled wood fiber thus guaranteeing an optimal surface quality of the panel 10.

After each depositing of a respective aerated layer 111, 112, 113, there can be provided a step of weighing the aerated layer 111, 112, 113 deposited which provides an indication, for example in terms of kg/m², of the weight of the aerated layer 111 , 112, 113 in such a way as to constantly control and adjust the previous steps of depositing as a function of the size and structural parameters to be obtained in the final panel 10.

In particular, the weighing of the second aerated layer 112 can provide to calculate by difference, in the direction of work X, between the weighing downstream of the depositing of the second aerated layer 112 and the weighing downstream of the depositing of the first aerated layer 111. Similarly, the weighing of the third aerated layer 113 can be carried out.

According to one embodiment, the method provides to subject the multilayer assembly 110 of aerated layers to pre-pressing operations before pressing the multilayer assembly 110.

The pre-pressing has the function of compacting the multilayer assembly 110, obtaining an assembly of compacted aerated layers 210, before subjecting it to the subsequent pressing. This pre-pressing or preliminary compacting step allows to give the right consistency to the multilayer assembly 110 before the next pressing step.

The pressing step provides to continuously hot-press the compacted assembly 210 of aerated layers to the desired size of the final panel 10 while the compacted assembly 210 of aerated layers moves in the direction of work X transported by the conveyor 18. Furthermore, during the hot-pressing, such size of the panel 10 is solidified and constrained by activating, by means of the heat, the adhesive or resin (for example thermosetting resin) present between the wood fibers, so as to bond the wood fibers together obtaining a continuous panel 310 that is compact, solid and with a surface substantially of virgin wood fiber, or in any case comprising high quality virgin wood fiber.

Subsequently, the assembly 110 of aerated layers, transformed into a continuous panel 310, is cut to size.

After the continuous panel 310 has been cut to size into panels 10 of desired sizes, the panels 10 can be cooled, stacked and stored.

The panels 10 thus obtained can possibly be surface treated, for example smoothed, or finished with surface treatments in order to obtain the desired final product.

It is clear that modifications and/or additions of parts or steps may be made to the panel 10 of wood fiber, to the corresponding production method and to the corresponding plant 14 as described heretofore, without departing from the field and scope of the present invention.

It is also clear that, although the present invention has been described with reference to some specific examples, a person of skill in the art shall certainly be able to achieve many other equivalent forms of panel 10 of wood fiber, method and plant having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. MDF (Medium Density Fiberboard) wood fiber obtained dry panel, said panel being multilayer, consisting of at least three layers of which at least one internal core layer (12) and two external layers (11, 13) disposed adjacent to said internal core layer (12) on opposite sides with respect to each other, wherein said internal core layer (12) is formed by recycled wood fiber, or a combination of recycled wood fiber and virgin wood fiber, and said external layers (11, 13) comprise virgin wood fiber.

2. Panel as in claim 1, **characterized in that** said external layers (11, 13) have a respective thickness (SL1, SL2) substantially the same as each other and said internal core layer (12) has a thickness (CL) greater than the thickness (SL1, SL2) of each of the external layers (11, 13), wherein optionally said internal core layer (12) has a thickness (CL) greater than the sum of the thicknesses (SL1, SL2) of each of the external layers (11, 13).

3. Panel as in any claim hereinbefore, **characterized in that** said internal core layer (12) comprises, or is formed by, recycled wood fiber of any granulometry or size whatsoever coming from industrial workings or scraps from industrial workings, from packaging, from used furnishing elements or furniture, from building materials, from forestry or agricultural waste or from public or private green areas, and/or from post-consumption, in particular from recycling collection and/or post-consumption sorting, or from a combination of recycled wood fiber and virgin wood fiber.

4. Panel as in any claim hereinbefore, **characterized in that** the fibers of said panel, in particular both the fibers of the internal core layer (12) and also the fibers of the two external layers (11, 13), are bonded by means of adhesives, in particular one or more aminoplastic or isocyanate adhesives.

5. Panel as in any claim hereinbefore, **characterized in that** the fibers of said panel, in particular both the fibers of the internal core layer (12) and also the fibers of the two external layers (11, 13), have a length of 50-8000 micrometers, in particular 100-4000 micrometers, and a diameter of 10-100 micrometers, in particular 15-60 micrometers.

6. Panel as in any claim hereinbefore, **characterized in that** the fibers of said panel, in particular both the fibers of the internal core layer (12) and also the fibers of the two external layers (11, 13), are obtained through defibration by means of thermo-mechanical pulping.

7. Panel as in any claim hereinbefore, **characterized in that** said internal core layer (12) consists exclusively of recycled wood fibers, or a combination of recycled wood fibers and virgin wood fibers, bonded by means of adhesives, in particular one or more aminoplastic or isocyanate adhesives and said external layers (11, 13) consist exclusively of virgin wood fibers bonded by means of adhesives, in particular one or more aminoplastic or isocyanate adhesives.

8. Plant to produce a panel (10) of multilayer MDF wood fiber obtained dry and consisting of at least three layers of wood fiber, of which at least one internal core layer (12) and two external layers (11, 13) disposed adjacent to said internal core layer (12) on opposite sides with respect to each other, said plant (14) comprising:
- two independent lines (15, 16) to feed wood fiber configured to respectively supply a first flow (F1) comprising wood fiber and a second flow (F2) comprising wood fiber, of which a first wood fiber feed line (15) configured to supply the first flow (F1) comprising virgin wood fiber and a second wood fiber feed line (16) configured to supply the second flow (F2) comprising recycled wood fiber or fiber obtained from a combination of recycled and virgin wood;
- a station (19) to form a multilayer assembly (110) of aerated wood fiber, said forming station (19) comprising in sequence in a direction of work (X): i) first depositing means (20) able to deposit a first aerated layer (111) of wood fiber coming from said first flow (F1) in order to form a first external layer (11), ii) second depositing means (21) able to deposit a second aerated layer (112) of fiber coming from at least said second flow (F2) in order to form the internal core layer (12) above the first external layer (11), iii) third depositing means (22) able to deposit a third aerated layer (113) of fiber coming from said first flow (F1) in order to form a second external layer (13) above the internal core layer (12) obtaining a multilayer assembly (110) of aerated wood fiber;
- hot-pressing means (24) configured to hot-press said multilayer assembly (110) in order to compact the wood fiber and obtain a desired thickness;
- cutting means (25) configured to cut to size the multilayer assembly (110) thus pressed in order to obtain said panel (10).

9. Plant as in claim 8, **characterized in that** said first wood fiber feed line (15) comprises at least one fiber preparation module (31) configured to transform the wood into wood fiber through defibration by means of thermo-mechanical pulping, and said second wood fiber feed line (16) comprises at least one respective fiber preparation module (31) configured to transform the recycled wood into recycled wood fiber through defibration by means of thermo-mechanical pulping, wherein optionally both said at least one fiber preparation module (31) of the first wood fiber feed line (15), and also said at least one fiber preparation module (31) of the second wood fiber feed line (16) comprise a defibrator in which heated wood chips are centrifuged between refining discs, one fixed, the other in rotation, the discs being provided with wear segments with grooves through which the wood chips are forced, so that the friction forces that develop are such as to separate the individual fibers from each other.

10. Plant as in claim 8 or 9, **characterized in that** it comprises pre-pressing means (23) suitable to compact and de-aerate the multilayer assembly (110), disposed after the third depositing means (22) of the forming station (19) and upstream of said hot-pressing means (24).

11. Plant as in claim 8, 9 or 10, **characterized in that** said second wood fiber feed line (16) comprises at least one station (32) to clean said recycled wood upstream of said fiber preparation module (31) or inside the fiber preparation module (31).

12. Method to produce a panel (10) of multilayer MDF wood fiber obtained dry and consisting of at least three layers of wood fiber, of which at least one internal core layer (12) and two external layers (11, 13) disposed adjacent to said internal core layer (12) on opposite sides with respect to each other, said method comprising:
- feeding two independent flows (F1, F2), of which a first flow (F1) of wood fiber and a second flow (F2) of wood fiber, wherein said first flow (F1) feeds at least virgin wood fiber and said second flow (F2) feeds at least recycled wood fiber or fiber of combinations of recycled and virgin wood, so that said external layers (11, 13) comprise virgin wood fiber and said internal core layer (12) is made of recycled wood fiber or combinations of recycled and virgin wood;
- depositing in sequence: i) a first aerated layer (111) of wood coming from said first flow (F1) in order to form a first external layer (11), ii) a second aerated layer (112) of wood coming from at least said second flow (F2) in order to form the internal core layer (12) above the first external layer (11), iii) a third aerated layer (113) of wood coming from said first flow (F1) in order to form a second external layer (13) above the internal core layer (12) obtaining a multilayer assembly (110) of aerated wood fiber;
- hot-pressing said multilayer assembly (110) in order to compact the wood fiber and obtain a desired thickness;
- cutting to size the multilayer assembly (110) thus pressed in order to obtain said panel (10).

13. Method as in claim 12, **characterized in that** it comprises a step of pre-pressing the multilayer assembly (110) before the hot-pressing step, in order to compress the multilayer assembly (110), compacting it and de-aerating it and obtaining a compacted assembly of aerated layers (210).

14. Method as in claim 12 or 13, **characterized in that** said first flow (F1) of wood fiber and said second flow (F2) of wood fiber are respectively prepared by transforming wood into wood fiber through defibration by means of thermo-mechanical pulping, wherein optionally the defibration provides that heated wood chips are centrifuged between refining discs, one fixed, the other in rotation, the discs being provided with wear segments with grooves through which the wood chips are forced, so that the friction forces that develop are such as to separate the individual fibers from each other.

15. Method as in claim 12, 13 or 14, **characterized in that** the fibers used, in particular both the fibers of the internal core layer (12) and also the fibers of the two external layers (11, 13), have a length of 50 -8000 micrometers, in particular 100-4000 micrometers, and a diameter of 10-100 micrometers, in particular, 15-60 micrometers, and are distributed in a substantially random manner, without a preferential spatial orientation, so that said panel (10) in fact has isotropic mechanical properties, at least with respect to the length and width of said panel (10).

16. Method as in any claim from 12 to 15, **characterized in that,** before the step of feeding two independent flows, said method comprises at least one step (100) of cleaning the recycled wood of said second flow (F2) in order to remove the polluting materials present.

17. Method as in claim 16, **characterized in that** said cleaning step (100) comprises one or more of the following sub-steps:
- sifting and removal (101) of light polluting materials, such as paper, fabric or suchlike;
- removal (102) of ferromagnetic polluting materials;
- removal (103) of non-ferromagnetic polluting materials;
- removal (104) of inert polluting materials, such as in particular stones, glass or suchlike;
- removal (105) of polluting material made of plastic, rubber or, in general, polymers foreign to the wood raw material.
